# EUROPEAN PATENT SPECIFICATION

(11) **EP 1 898 573 B1**
(45) Date of publication and mention of the grant of the patent: **27.01.2016**
(21) Application number: 07115737.4
(22) Date of filing: 05.09.2007
(51) Int. Cl.: H04W 28/18, H04W 76/04

(54) **Wireless communication management method and apparatus**
Verfahren zur Verwaltung drahtloser Kommunikation und Vorrichtung
Procédé de gestion d'une communication sans-fil et appareil

(30) Priority: 06.09.2006 FR 0653586
(43) Date of publication of application: 12.03.2008
(73) Proprietor: ALCATEL LUCENT, 92100 Boulogne-Billancourt (FR)
(72) Inventor: Helbert, Emmanuel, 67140 Andlau (FR)
(74) Representative: Sciaux, Edmond

(56) References cited:
- EP-A- 1 011 228
- WO-A-02/099574
- US-A- 5 673 253
- US-A1- 2002 167 968
- US-B1- 6 483 820

## Description

The present invention concerns a method for managing a wireless call and an access interface to a wireless communication network using such a method.

A wireless communication network enables one or more terminals to transmit information by means of signals transmitted by radio waves. There may be cited by way of example cellular telephone networks, such as GSM and 3G networks, and networks using the Internet Protocol (IP), such as WIFI and WIMAX networks.

A terminal on this kind of wireless communication network, also known as a wireless local area network (WLAN), generally uses data transmission bit rates from 1 kbps to more than 50 Mbps, or even more than 100 Mbps, as a function of the nature of the network and the data transmitted.

A terminal seeking to access a wireless communication network must first contact an interface providing access to that network, which interface can take the form of a server, an access point or, generally speaking, any centralized or decentralized structure for relaying calls between the terminal and an element of the communication network.

When this contact is made, the access interface must then determine if it can allocate resources to the terminal in order to maintain the call requested by the terminal and to assure its quality.

If this is the case, the network access interface allocates those resources permanently to the call by the terminal concerned, this permanence assuring that the quality of the connection offered to the terminal is maintained throughout the call.

Finally, the resources of the access interface are normally released when the call ends.

Furthermore, it is known that a terminal can access two separate wireless networks simultaneously. For example, the patent application US 2006/0045069A1 describes a method enabling a terminal to use simultaneously a cellular telephone network and an IP telephone network, in particular to assure a constant quality of service for a call made by the terminal, which call can use each of the two wireless networks alternately.

The permanent allocation of resources to a terminal by a wireless communication network access interface can limit the use of the resources of that access interface, and this constitutes a problem. In fact, the access interface can allocate resources to only a limited number of terminals and so, once all its resources have been allocated, an access interface cannot accept a new connection. Resource requirements can evolve, with the result that calls can be effected afterwards with resources inferior to those initially allocated.

The document WO 02/099574 describes a method that comprises the following steps:
- determining the resources of the access interface used by the terminal during its wireless call,
- comparing the resources of the access interface allocated to the terminal to the resources of the access interface used by the terminal, and
- reducing the resources allocated by the access interface as a function of that comparison. More precisely, the access interface decides to reduce the resources allocated to the terminal and informs the terminal that the resources allocated are reduced from now on, after which it allocates the resources released in this way to another terminal.

This method has the drawback of imposing on a terminal a reduction of the resources allocated to that terminal, even in cases where that will prove to be a problem shortly afterwards. In fact, the fact that, at a given time, a terminal is not using all of the resources that it has requested and obtained does not imply that it will not need them shortly afterwards.

The object of the present invention is to remedy this drawback.

The subject matter of the present invention is a method for managing a wireless call set up by a terminal via an interface providing access to a wireless communication network, that access interface allocating connection resources to that terminal when setting up its call, the method comprising the following steps:
- determining the resources of the access interface used by the terminal during its wireless call, and
- comparing the resources of the access interface allocated to the terminal to the resources of the access interface used by the terminal,
and being characterized in that it further comprises the steps of:
- proposing to the terminal reducing the resources allocated by the access interface to the terminal as a function of that comparison,
- receiving a response from the terminal in the interface, and then
- reducing the resources allocated by the access interface to the terminal if the response from the terminal is an acceptance.

Such a method has numerous advantages. If the terminal responds with an acceptance, the access interface can reduce the resources allocated to that terminal dynamically, i.e. during a call, knowing that there is no risk of degrading the quality of that call if evolution thereof later necessitates the consumption of more resources than are being consumed at the time concerned. Releasing those resources then enables the access interface to accept new calls, and so the access interface increases the number of user terminals of the wireless communication network, which improves the efficiency and the performance of the access interface and the network concerned.

If the terminal responds with a refusal, the resources allocated are maintained, even though they are partially unused at the time concerned. This guarantees that the quality of service will be maintained throughout the remainder of the call in progress.

In one embodiment the method includes the step of using a threshold for the resources of the access interface used by the terminal or by all of the terminals connected to that access interface, beyond which threshold the management method is triggered automatically.

Similarly, in one embodiment the method includes the step of using a threshold for the resources of the access interface allocated to the terminal or to all of the terminals connected to the access interface, beyond which threshold the management process is triggered automatically.

Accordingly, as a function of this threshold for the resources used or allocated, it is possible to determine a critical threshold beyond which the access interface must propose a reduction of the resources allocated for one or more calls.

One embodiment of the method includes the step of requesting acceptance from a second terminal communicating with the terminal that set up a call of reducing the resources allocated when setting up that call so that the user of this second terminal is also in a position to accept or to refuse this reduction of the resources that might lead to a reduction of the quality of service.

One embodiment of the method includes the step of reducing the allocated resources by modifying at least one of the following parameters of the call: a bandwidth, a bit rate, a transmission period, a transfer rate, an acknowledgement method, a packet size, a coding type.

The present invention also consists in an access interface to a wireless communication network, that access interface comprising means for allocating connection resources to a terminal in order to set up a call in a communication network, said interface further comprising means for:
- determining the resources used by the terminal during its wireless call,
- comparing the resources of the access interface allocated to the terminal to the resources of the access interface used by the terminal, and
- reducing the resources allocated by the access interface as a function of that comparison,
and being characterized in that it further comprises means for:
- proposing to the terminal reducing the resources allocated by the access interface to the terminal as a function of that comparison,
- receiving a response from the terminal in the interface, and then
- reducing the resources allocated by the access interface to the terminal if the response from the terminal is an acceptance.

One embodiment of the interface includes means for applying a threshold for the resources of the access interface used by the terminal or by all of the terminals connected to that access interface, beyond which threshold it proposes a reduction of the resources allocated to the call.

One embodiment of the interface includes means for requesting acceptance from a second terminal communicating with the first terminal that set up a call of reducing the resources that have been allocated for the call.

One embodiment of the interface includes means for requesting acceptance of reducing the allocated resources by means of a request transmitted in the MAC layer or in the content of a signaling packet.

One embodiment of the interface includes means for reducing the allocated resources by modifying at least one of the following parameters of the call: a bandwidth, a bit rate, a transmission period, a transfer rate, an acknowledgement method, a packet size, a coding type.

One embodiment of the interface includes means for informing the terminal that reducing the resources leads to a reduction of the cost of access to the communication network.

One embodiment of the interface includes means for decoding a signaling protocol relating to data transmitted in accordance with the Internet protocol.

Finally, the invention also concerns a communication terminal including means for setting up a call via an interface providing access to a wireless communication network, characterized in that it further comprises means for receiving a proposal to reduce the resources allocated to its call by the access interface and means for sending an acceptance or a refusal of that reduction to the access interface.

Thus the terminal retains control over any reduction of the resources allocated to its call by the access interface.

One embodiment of the terminal includes means for informing a second terminal with which it has set up a call via the access interface of the proposal to reduce the resources allocated by the access interface for their call.

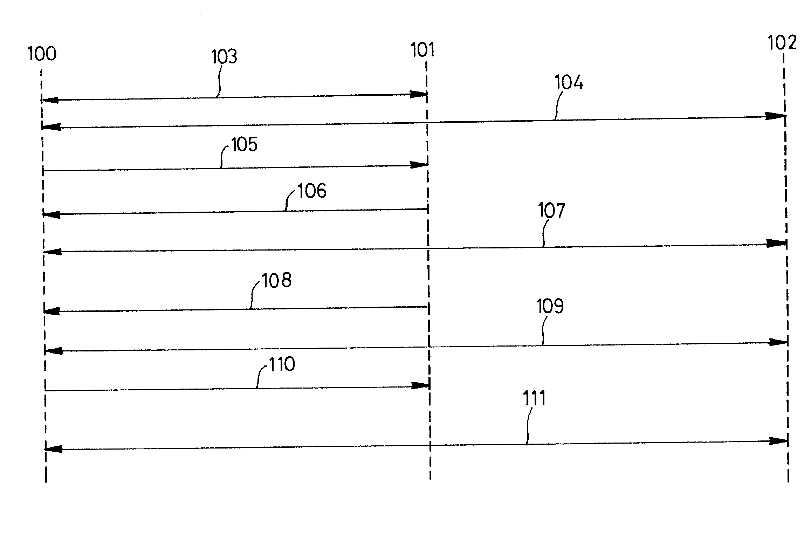

Other features and advantages of the invention will become apparent in the light of the following illustrative and nonlimiting description of one embodiment of this invention, referring to the appended single figure in which are represented the various steps of a method of the invention for managing a connection between a WLAN access interface and a WLAN terminal of the invention.

More precisely, this method manages calls between a terminal 100 calling a terminal 102 accessible via a WLAN network via a access interface 101 of that WLAN network.

To this end, during a step 103, the calling terminal 100 is associated with the access interface 101 with which it enters into contact. Thanks to this association, a step 104 of connecting the terminal 100 and the terminal 102 via the interface 101 can be effected. For example, this connection can be effected in accordance with an SIP call set-up protocol.

When the setting up of a call is confirmed, the calling terminal 100 indicates to the access interface 101 the characteristics, in particular the bandwidth, required to maintain a particular level of quality of its call to the terminal 102.

The allocation of resources can be the subject of negotiation between the terminal 100 and the interface 101 ending in the determination of an accepted value that is confirmed by the interface 101 during steps 105 and 106.

Thanks to the allocation of those resources, the terminal 100 can exchange data with the remote terminal 102 using a predetermined first bandwidth (step 107). For example, a bandwidth of 64 kbps can be envisaged with a G.711 voice encoding standard of the ITU-T (International Telecommunications Union - Telecommunications).

Thereafter, according to the invention, the interface 101 determines during the call the resources used by the terminal 100 during its wireless call and compares the resources used to the resources allocated to the terminal.

In this embodiment, these steps are executed if a threshold for the resources of the access interface 101 allocated to all the terminals connected to that access interface is reached.

However, the operation can instead be triggered when the resources allocated to the call made by the terminal 100 reach a threshold or when the resources used by that terminal 100 or by all of the terminals connected to the access interface reach a threshold.

This comparison can show up the possibility of reducing the allocated resources, in particular if the resources used, i.e. the resources actually required for the transmission of information, are less than the resources allocated by the access interface.

In this case, the interface 100 proposes during a step 108 that the terminal 100 should use less resources for its call, for example using means for decoding a signaling protocol relating to data transmitted in accordance with the Internet Protocol (IP).

In other embodiments, the access interface can inform the terminal 102 of the reduction of the resources by means of a request transmitted in the MAC layer or in the content of a signaling packet.

This proposal can be effected by proposing new coding using a lower bit rate. For example, the ITU-T G.729 standard can be used instead of the G.711 standard.

Generally speaking, a resource reduction proposal is sent to take account of a new characteristic of the transmission of information. That proposal aims to reduce the resources allocated to the terminal for this call, for example a packet size, a new packet acknowledgement procedure or a minimum transfer rate. The proposal can equally be based on the coding capacities of the terminals, which are indicated in the SIP messages exchanged when setting up the call.

The terminal 100 analyzes the possibility of any such change, in particular by examining with the terminal 102 during a step 109 the benefit and feasibility of any such change.

To encourage the acceptance of such a reduction of resources, this reduction proposal can be accompanied by information relating to a reduction in the cost of access to the communication network, for example.

If the terminal 100 accepts the change, it informs the interface 101 of that acceptance during a step 110 using the mode of operation offered by the access interface 101.

In this embodiment, this modification is effected by reducing the bit rate used by the terminal 100 to a value of 8 kbps specified in the G.729 standard.

The terminal 100 afterwards communicates with the terminal 102 during a step 111 in accordance with the new communication conditions. The interface 101 then releases the resources accordingly.

## Claims

1. Method for managing a wireless call set up by a first terminal (100) via an interface (101) providing access to a wireless communication network, that access interface (101) allocating connection resources to that first terminal (100) when setting up its call, the method comprising the following steps:
- determining the resources of the access interface (101) used by the first terminal (100) during its wireless call to a second terminal (102), and
- comparing the resources of the access interface (101) allocated to the first terminal (100) to the resources of the access interface (101) used by the first terminal (100),
- proposing to the first terminal (100) a new mode of operation reducing the resources used by the first terminal, this proposal aiming to reduce the resources allocated by the access interface (101) to the first terminal (100) as a function of that comparison,
- analyzing, in the first terminal (100), the possibility of such change of mode of operation,
- the first terminal (100) informing the second terminal (102) and requesting acceptance from the second terminal (102) for reducing the resources that have been allocated to the first terminal (100) for the call,
- sending an acceptance or a refusal from the first terminal (100) to the interface (101),
- and reducing the resources allocated by the access interface (101) to the first terminal (100) if the first terminal accepts the new mode of operation proposed by the interface (101).

2. Method according to claim 1 including the step of using a threshold for the resources of the access interface (101) used by the first terminal (100) or by all of the terminals connected to that access interface (101), beyond which threshold the management method is triggered automatically.

3. Method according to claim 1 or 2 including the step of using a threshold for the resources of the access interface (101) allocated to the first terminal (100) or to all of the terminals connected to the access interface (101), beyond which threshold the management method is triggered automatically.

4. Method according to any one of the preceding claims including the step of reducing the allocated resources by modifying at least one of the following parameters of the call: a bandwidth, a bit rate, a transmission period, a transfer rate, an acknowledgement method, a packet size, a coding type.

5. Communication terminal (100) including means for setting up a call with a second terminal (102) via an access interface (101) to a wireless communication network, and
- means for receiving, from the access interface (101), a proposal of a new mode of operation reducing the resources used by the communication terminal (100), this proposal aiming to reduce the resources allocated to its call by the access interface (101),
- means for analyzing the possibility of such change of mode of operation,
- means for informing the second terminal (102) and requesting acceptance from the second terminal (102) for reducing the resources that have been allocated to the communication terminal (100) for their call, means for sending an acceptance or a refusal of that reduction to the access interface (101).

## Patentansprüche

1. Verfahren zum Verwalten eines drahtlosen Rufaufbaus durch ein erstes Endgerät (100) über eine Schnittstelle (101), die einen Zugang zu einem drahtlosen Kommunikationsnetzwerk bereitstellt, wobei diese Zugangsschnittstelle (101) diesem ersten Endgerät (100) beim Aufbau seines Anrufs Verbindungsressourcen zuweist, wobei das Verfahren folgende Schritte umfasst:
- Bestimmen der Ressourcen der Zugangsschnittstelle (101), die vom ersten Endgerät (100) während seines drahtlosen Anrufs zu einem zweiten Endgerät (102) benutzt werden, und
- Vergleichen der Ressourcen der Zugangsschnittstelle (101), die dem ersten Endgerät (100) zugewiesen werden, mit den Ressourcen der Zugangsschnittstelle (101), die vom ersten Endgerät (100) benutzt werden,
- Vorschlagen, dem ersten Endgerät (100), eines neuen Betriebsmodus, der die vom ersten Endgerät benutzten Ressourcen verringert, wobei dieser Vorschlag darauf abzielt, die Ressourcen zu verringern, die von der Zugangsschnittstelle (101) dem ersten Endgerät (100) in Abhängigkeit von diesem Vergleich zugewiesen werden,
- Analysieren, im ersten Endgerät (100), der Möglichkeit einer solchen Änderung des Betriebsmodus,
- wobei das erste Endgerät (100) das zweite Endgerät (102) informiert und vom zweiten Endgerät (102) eine Einwilligung zum Verringern der Ressourcen fordert, die dem ersten Endgerät (100) für den Anruf zugewiesen wurden,
- Senden einer Einwilligung oder einer Ablehnung vom ersten Endgerät (100) an die Schnittstelle (101), und
- Verringern der Ressourcen, die von der Zugangsschnittstelle (101) dem ersten Endgerät (100) zugewiesen werden, wenn das erste Endgerät den neuen, von der Schnittstelle (101) vorgeschlagenen Betriebsmodus akzeptiert.

2. Verfahren nach Anspruch 1, umfassend den Schritt des Benutzens eines Grenzwerts für die Ressourcen der Zugangsschnittstelle (101), die vom ersten Endgerät (100) oder von allen Endgeräten, die mit dieser Zugangsschnittstelle (101) verbunden sind, benutzt werden, wobei jenseits dieses Grenzwerts das Verwaltungsverfahren automatisch ausgelöst wird.

3. Verfahren nach Anspruch 1 oder 2, umfassend den Schritt des Benutzens eines Grenzwerts für die Ressourcen der Zugangsschnittstelle (101), die dem ersten Endgerät (100) oder allen Endgeräten, die mit dieser Zugangsschnittstelle (101) verbunden sind, zugewiesen werden, wobei jenseits dieses Grenzwerts das Verwaltungsverfahren automatisch ausgelöst wird.

4. Verfahren nach einem beliebigen der vorstehenden Ansprüche, umfassend den Schritt des Verringerns der zugewiesenen Ressourcen durch Ändern von mindestens einem der folgenden Parameter des Anrufs: eine Bandbreite, eine Bitrate, eine Übertragungsperiode, eine Transferrate, ein Bestätigungsverfahren, eine Paketgröße, ein Codierungstyp.

5. Kommunikationsendgerät (100), umfassend Mittel zum Aufbau eines Anrufs zu einem zweiten Endgerät (102) über eine Zugangsschnittstelle (101) zu einem drahtlosen Kommunikationsnetzwerk, und
- Mittel zum Empfangen, von der Zugangsschnittstelle (101), eines Vorschlags für einen neuen Betriebsmodus, der die vom Kommunikationsendgerät (100) benutzten Ressourcen verringert, wobei dieser Vorschlag darauf abzielt, die Ressourcen zu verringern, die seinem Anruf von der Zugangsschnittstelle (101) zugewiesen werden,
- Mittel zum Analysieren der Möglichkeit einer solchen Änderung des Betriebsmodus,
- Mittel zum Informieren des zweiten Endgeräts (102) und Anfordern einer Einwilligung vom zweiten Endgerät (102) zum Verringern der Ressourcen, die dem Kommunikationsendgerät (100) für seinen Anruf zugewiesen wurden,
- Mittel zum Senden einer Einwilligung oder einer Ablehnung dieser Verringerung an die Zugangsschnittstelle (101).

## Revendications

1. Procédé pour gérer un appel sans fil établi par un premier terminal (100) via une interface (101) fournissant l'accès à un réseau de communication sans fil, ladite interface d'accès (101) allouant des ressources de connexion audit premier terminal (100) lors de l'établissement de son appel, le procédé comprenant les étapes suivantes :
- déterminer les ressources de l'interface d'accès (101) utilisées par le premier terminal (100) pendant son appel sans fil à un second terminal (102), et
- comparer les ressources de l'interface d'accès (101) allouées au premier terminal (100) aux ressources de l'interface d'accès (101) utilisées par le premier terminal (100),
- proposer au premier terminal (100) un nouveau mode de fonctionnement réduisant les ressources utilisées par le premier terminal, ladite proposition visant à réduire les ressources allouées par l'interface d'accès (101) au premier terminal (100) en fonction de ladite comparaison,
- analyser, dans le premier terminal (100), la possibilité d'un tel changement de mode de fonctionnement,
- le premier terminal (100) informant le second terminal (102) et demandant l'acceptation au second terminal (102) de réduire les ressources qui ont été allouées au premier terminal (100) pour l'appel,
- envoyer une acceptation ou un refus du premier terminal (100) à l'interface (101), et
- réduire les ressources allouées par l'interface d'accès (101) au premier terminal (100) si le premier terminal accepte le nouveau mode de fonctionnement proposé par l'interface (101).

2. Procédé selon la revendication 1, comprenant l'étape d'utilisation d'un seuil pour les ressources de l'interface d'accès (101) utilisées par le terminal (100) ou par tous les terminaux connectés à ladite interface d'accès (101), au-delà duquel seuil le procédé de gestion est déclenché automatiquement.

3. Procédé selon la revendication 1 ou 2, comprenant l'étape d'utilisation d'un seuil pour les ressources de l'interface d'accès (101) allouées au premier terminal (100) ou à tous les terminaux connectés à l'interface d'accès (101), au-delà duquel seuil le procédé de gestion est déclenché automatiquement.

4. Procédé selon l'une quelconque des revendications précédentes, comprenant l'étape de réduction des ressources allouées en modifiant au moins un des paramètres suivants de l'appel : une largeur de bande, un débit binaire, une période de transmission, un taux de transfert, un procédé d'accusé de réception, une taille de paquet, un type de codage.

5. Terminal de communication (100) comprenant des moyens pour établir un appel avec un second terminal (102) via une interface d'accès (101) à un réseau de communication sans fil, et
- moyens pour recevoir, en provenance de l'interface d'accès (101), une proposition d'un nouveau mode de fonctionnement réduisant les ressources utilisées par le terminal de communication (100), ladite proposition visant à réduire les ressources allouées à son appel par l'interface d'accès (101),
- moyens pour analyser la possibilité d'un tel changement de mode de fonctionnement,
- moyens pour informer le second terminal (102) et demander l'acceptation au second terminal (102) de réduire les ressources qui ont été allouées au terminal de communication (100) pour leur appel,
- moyens pour envoyer une acceptation ou un refus de ladite réduction à l'interface d'accès (101).
